## Europäisches Patentamt
## European Patent Office
## Office européen des brevets

(19)

(11) Publication number: **0 014 083**
**A1**

(12)

# EUROPEAN PATENT APPLICATION

(21) Application number: **80300180.9**

(22) Date of filing: **21.01.80**

(51) Int. Cl.³: **C 08 F 20/04, C 08 F 2/10**

(30) Priority: **22.01.79 US 4974**
**14.05.79 US 39093**
**03.12.79 US 99774**

(43) Date of publication of application: **06.08.80**
**Bulletin 80/16**

(84) Designated Contracting States: **AT BE CH DE FR GB IT NL**

(71) Applicant: **Rohm and Haas Company, Independence Mail West, Philadelphia, Pennsylvania 19105 (US)**

(72) Inventor: **Hughes, Kathleen Anne, 666 W. Germantown Pike, No. 6095, Plymouth Meeting, PA 19462 (US)**
Inventor: **Kine, Benjamin Beryl, 414 S. Sterling Road, Elkins Park PA 19117 (US)**
Inventor: **Swift, Graham, 663 Cathcart Road, Blue Bell, PA 19422 (US)**

(74) Representative: **Angell, David Whilton et al, Rohm and Haas Company Patent Department Chesterfield House Barter Street, London WC1A 2TP (GB)**

(54) **Low molecular weight watersoluble polymers, their preparation and their use in scale inhibition.**

(57) In the preparation of low molecular weight water soluble polymers having a molecular weight of up to about 50,000, monomer comprising (a) at least one of acrylic acid, methacrylic acid, acrylamide, methacrylamide, alkylpolyalkoxyacrylate, alkylpolyalkoxy methacrylate, N-vinyl pyrrolidone, acryloxypropionic acid, methacrolein and acrolein and optionally from about 5 to 50% by weight of the total monomers present of (b) at least one of itaconic acid, maleic acid, fumaric acid, hydroxyethylmethacrylate, hydroxypropylmethacrylate, hydroxyethylacrylate, hydroxypropylacrylate, acrylonitrile, methacrylonitrile, dimethylaminoethyl acrylate, dimethylaminoethyl methacrylate, t-butylaminoethyl acrylate, 4-vinyl pyridine, beta-hydroxyethyldimethylaminoethyl methacrylate salt and t-butylaminoethyl methacrylate, is reacted in an aqueous solution system at a temperature up to the boiling point of said system in the presence of a catalyst system comprising initiator and metal salt wherein the molar ratio of initiator to metal ion is from about 10:1 to about 5000:1, preferably from 10:1 to 150:1, and the initiator is present in an amount of from about 0.5 weight percent to about 35 weight percent based on the weight of monomer present. The catalyst system may also comprise reducing agent wherein the molar ratio of initiator to metal ion is preferably from about 150:1 to about 5000:1 and the molar ratio of initiator to reducing agent is from about 0.5:1 to about 20:1. Polymer prepared by this method, such as polyacrylic acid, may be used as a scale inhibitor.

0014083

- 1 -

## PROCESS FOR PREPARING LOW MOLECULAR WEIGHT
## WATER SOLUBLE POLYMERS

This invention is concerned with the preparation of low molecular weight polymers, polymers produced thereby and their use as scale inhibitors.

When a polymer, such as polyacrylic acid, is prepared, one method of preparation is the use of a redox catalyst system (initiator and reducing agent). Because it is believed that the use of a redox catalyst system will result in a high molecular weight polymer (e.g. in excess of a molecular weight of 50,000), when a low molecular weight polymer is desired, a chain transfer agent, such as a mercaptan, is incorporated during the polymerization reaction to control the molecular weight and to obtain low molecular weight materials. The use of mercaptans to control molecular weight is expensive and the mercaptan odor is undesirable and permeates the resultant product.

U.S. Patent 3,635,915 discloses a copolymer of maleic acid and acrylic acid prepared by polymerizing a mixture of the monomers in water in the presence of a redox polymerization catalyst system. This patent teaches that the polymerization reaction may be terminated in order to obtain products having desired viscosities by introducing short-stopping agents when the desired extent of polymerization has been obtained. The short stopping agents which are set forth are methyldithiocarbamic acid, hydroquinone and, when a peroxide or persulfate is utilized as a catalyst, sodium bisulfite is utilized as the short stopping agent.

U.S. Patent 3,635,915 also teaches that copolymers of maleic acid and acrylic acid may be prepared using a thermal polymerization process. In this thermal process the catalyst has a short half life at elevated temperatures so that it will decompose at such temperatures and supply the free radicals necessary for the polymerization reaction. The thermal process of U.S. Patent 3,635,915 is ineffective in preparing low molecular weight polymers without the use of a chain transfer agent. Additionally, in order to prepare polymers of exceedingly low molecular weights, excessively large amounts of the thermally decomposable catalyst and of the chain transfer agent must be used. These excessive amounts of catalyst and chain transfer agent render this thermal process economically unsound.

U.S. Patent 3,509,114 is directed to the polymerization of water soluble acrylic monomers in aqueous solution and discloses that a redox catalyst system may be used to prepare high molecular weight acrylic polymers.

U.S. Patent 4,024,099 is directed to the preparation of very high molecular weight, water soluble acidic polymers using a redox catalyst system and a methylolamide or formaldehyde reagent. The patent sets forth that high catalyst to monomer ratios in polymerization reactions cause lower molecular weights in the resulting polymer. The patent also teaches that the reducing agent of the redox catalyst system may be a metal salt such as ferrous sulfate and that the reducing reagents are used in amounts approximately equivalent to that of the peroxy catalyst.

The processes described in U.S. Patent 3,635,915; 3,509,114; and 4,024,099 are unsuitable for preparing water soluble low molecular weight polymers either because they are more expensive processes than the present invention or they result in the preparation of high molecular weight polymers.

We have now found a process for the preparation of a water soluble low molecular weight homopolymer or copolymer, as defined herein, wherein the catalyst system is used to control the molecular weight of the resultant polymer.

In this invention the catalyst comprises an initiator, a metal salt, and, in some embodiments, a reducing agent and the molar ratio of these components and the amount of initiator is used to control the molecular weight of the resultant polymer.

This invention provides a process for the preparation of low molecular weight, water soluble polymer without using a mercaptan or other chain transfer agent to control the molecular weight.

According to this invention there is provided a process for preparing a water-soluble polymer having a molecular weight of up to about 50,000, which comprises reacting, in an aqueous solution system at a temperature of up to the boiling point of said system, a water soluble monomer selected from the class consisting of (a) acrylic acid, methacrylic acid, acrylamide, methacrylamide, acrolein, methacrolein, N-vinyl pyrollidone, alkylpolyalkoxyacrylate and methacrylate, acryloxypropionic acid, and mixtures thereof and (b) water soluble comonomers of one or more of the monomers of (a) with from about 5-50% by weight of the total monomers present of a comonomer selected from the class consisting of itaconic acid, maleic acid, fumaric acid, hydroxyethylmethacrylate, hydroxy-propylmethacrylate, hydroxyethylacrylate, hydroxypropyl-acrylate, acrylonitrile, methacrylonitrile, dimethyl-aminoethyl acrylate, dimethylaminoethyl methacrylate, t-butylaminoethyl acrylate, 4-vinyl pyridine, beta-hydroxyethyldimethylaminoethyl methacrylate salt, t-butylaminoethyl methacrylate, and mixtures thereof, in the presence of a catalyst system which comprises an initiator and a metal salt wherein the molar ratio of initiator to metal ion is from about 10:1 to about 5000:1, such as from about 10:1 to 150:1 or from about 150:1 to about 5000:1, and the initiator is present in an amount of from about 0.5 weight percent to about 35 weight percent based on the weight of monomer present.

In one embodiment of the invention the catalyst system also contains a reducing agent and the molar ratio of initiator to reducing agent is from about 0.5:1 to about 20:1, such as 1:1 to 20:1.

It has been surprisingly found that water soluble polymers or copolymers having a molecular weight of up to about 50,000 can be prepared in an aqueous solution system and that the molecular weight of the resultant polymer can be controlled if the catalyst system comprises an initiator, a metal salt, and optionally a reducing agent wherein the molar ratio of these components and the amount of initiator have certain values.

In one embodiment of this invention the catalyst system comprises initiator and metal salt wherein the molar ratio of initiator to metal ion is from about 10:1 to about 150:1, such as from 40:1 to 80:1. While such a system is useful we have found that the amount of metal remaining in the final product can lead to undesirable metal deposition in certain applications, such as under pH conditions of above about 10.

In another embodiment such drawbacks may be avoided with a catalyst system comprising initiator, metal salt and reducing agent wherein the molar ratio of initiator to metal ion is from about 150:1 to about 5000:1, preferably from 400:1 to 3000:1, such as from 400:1 to 2000:1 and the molar ratio of initiator to reducing agent is from about 0.5:1 to about 20:1, preferably from about 1:1 to 20:1, such as from 2:1 to 10:1.

In the specification and claims, unless otherwise specified, all percentages are percent by weight based on the weight of monomer present.

The catalyst system comprises a water soluble initiator, a water soluble reducing agent and a water soluble metal salt. The term "water soluble" used in describing the initiator, reducing agent and the metal salt means that they are completely soluble, in the amounts used, in the aqueous solution system in which the water soluble polymers or copolymers are prepared. Thus, a sparingly soluble metal salt such as cuprous bromide
may be used because the amount of metal salt used may be
small.   The total amount of the initiator present may
vary from about 0.5 weight percent to about 35 weight
percent based on the weight of monomer present and
preferably from about 1 weight percent to about 20 weight
percent.

Although more than about 35% may be used, the use of
such greater amount of initiator is economically unwarranted.
Although less than 0.5% of initiator may be used, the use
of such lesser amounts is not recommended because the
resultant polymer may have a molecular weight in excess
of 50,000.

It is preferred that the initiator be present in an
amount of from about 1% to about 20% because excellent
results have been obtained at such preferred range.

Among the water soluble initiators which may be used
are hydrogen peroxide, hydroperoxides such as t-butylhydroperoxide, sodium, potassium and ammonium persulfate,
barium persulfate, acetyl peroxide, sodium hypochlorite,
and the like.

The water soluble metal salt is present as part of
the catalyst system in an amount such that the molar ratio
of initiator to metal ion is as specified.   If the molar
ratio of initiator to metal ion exceeds about 5000:1,
then utilization of the initiator in the polymerization
reaction may be poor and control of the molecular weight
of the product polymer may be lost.

Among the water soluble metal salts which may be
used are the cupric and cuprous salts, and the water
soluble salts of iron, manganese, cobalt, chromium, silver,
gold, titanium, lead, cerium, such as the sulfates, chlorides,
acetates, nitrates, nitrites, and phosphates and the like.

Exemplary of the metal salts are cupric sulfate
pentahydrate, ferrous sulfate heptahydrate,  cuprous
acetate, ferrous acetate, manganese acetate, cerium (IV) sulfate, titanium (III) chloride, titanium (IV) chloride, lead (II) acetate, lead (IV) acetate, cupric acetate, ferric acetate hydroxide, ferrous and ferric chloride, ferrous and ferric phosphate, cuprous and cupric chloride, cuprous and cupric bromide, cupric nitrate, ferric sulfate, manganese bromide, manganese chloride, cobalt (II) acetate, cobalt (II) chloride, cobalt (II) nitrate, cobalt (II) sulfate, cerium (III) chloride, cerium (III) nitrate, cerium (III) sulfate, manganese nitrate, manganese sulfate, lead (II) chloride, lead (II) nitrate, and the like.

When the water soluble reducing agent is present as part of the catalyst system the amount is such that the molar ratio of initiator to reducing agent is from about 0.5:1 to about 20:1. A ratio of less than about 0.5:1 may not be desired because the degree of monomer conversion may be adversely affected and control of the molecular weight of the product polymer may be diminished. If, however, the molar ratio of initiator to reducing agent exceeds about 20:1, then utilization of the initiator is less efficient and some control over the molecular weight of the product polymer may be lost.

The water soluble reducing agents which may be used are those reducing agents capable of changing the oxidation state of the metal ion present from a higher oxidation level to a lower oxidation level. Among the water soluble reducing agents which may be used are hypophosphorous acid and salts thereof such as sodium hypophosphite, invert sugars such as D-fructose and D-glucose, sodium bisulfite, thiourea dioxide, hydrazine, sodium formaldehyde sulfoxylate, sodium hydrosulfite, sodium metabisulfite, isoascorbic acid, sodium hyponitrite, sodium sulfite, hydroxylamine hydrochloride, thiourea, and the like.

In a preferred embodiment, a water soluble tertiary amine may be incorporated as part of the catalyst system. The tertiary amine is used to enhance the control of the molecular weight of the desired polymers. Even if a tertiary amine is only sparingly soluble in water, it may be used as part of the reaction system provided that the amine used is soluble in the reaction system in the amount utilized.

The tertiary amine may be used in very minor amounts. If a tertiary amine is to be present, it may be used in a molar ratio of up to about 1 of amine to 10 of initiator. A molar ratio of 1 amine to 100 of initiator may also be used. Although a molar ratio of more than 1 amine to 10 of initiator may be used, there is no particular advantage to using such excessive amounts. If a molar ratio of less than 1 of the amine to 100 of the initiator is used, the beneficial effects of the amine toward molecular weight control tends to be diminished.

Among the tertiary amines which may be used are the aromatic, aliphatic and heterocyclic amines, alkanol amines, tertiary aminoacids, cycloaliphatic amines, and the like.

Exemplary of such tertiary amines are triethanolamine, dimethylamino ethanol, triethylamine, tripropylamine, tributylamine, tribenzylamine, ethylenediamine tetraacetic acid, triphenylamine, triisopropanolamine, N,N dimethyl ethanolamine, N,N diethyl ethanolamine, N,N diisopropyl ethanolamine, N-methyl diethanolamine, N,N,N',N'-tetramethyl-1,3-butane diamine, N,N,N',N'-tetramethyl-1,6-hexane diamine, pyridine, 2-acetylpyridine, 2-picoline, ethyl picolinate, N-methylpiperidine, 1-methyl-5-oxo-3-pyrrolidine carboxylic acid, picolinic acid, quinaldic acid, and the like.

The water soluble monomers which may be used in practicing this invention are acrylic acid, methacrylic acid, acrylamide, acrolein, methacrolein, methacrylamide, N-vinyl pyrollidone, methoxypolyethoxy- acrylate and methacrylate having from 3 to 35 ethoxy groups, acryloxypropionic acid, and mixtures thereof. These water soluble monomers may be used to prepare water soluble homopolymers or these monomers may be mixed with one another in any proportion to prepare water soluble copolymers. Other comonomers, which, if used as the sole monomer, would not result in a water soluble polymer may be used, in an amount of from about 5-50% by weight of the total monomers present, with one or more of the monomers from which homopolymers may be prepared. Among the comonomers which may be used are itaconic acid, fumaric acid, hydroxyethylmethacrylate hydroxypropylmethacrylate, hydroxyethylacrylate, hydroxypropylacrylate, acrylonitrile, methacrylonitrile, 4-vinyl pyridine, beta-hydroxyethyldimethylaminoethyl methacrylate salt, dimethylaminoethyl acrylate, dimethylaminoethyl methacrylate, t-butylaminoethyl acrylate, t-butylaminoethyl methacrylate, and mixtures thereof. Other comonomers, normally not considered as water soluble, may also be used in limited amounts of up to about 5% by weight of the total monomers present as long as the resultant polymer is water soluble. Among these comonomers may be mentioned vinyl acetate, styrene, vinyl toluene, alpha methyl styrene, and the like; and acrylate and methacrylate esters such as methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, secondary butyl acrylate, secondary butyl methacrylate, isobutyl acrylate, isobutyl methacrylate, ethylhexyl acrylate, ethylhexyl methacrylate, lauryl acrylate, lauryl methacrylate, stearyl acrylate, stearyl methacrylate, N,N-dialkylacrylamides such as N,N-diethylacrylamide and N-alkylacrylamide such as N-methylacrylamide, and the like. In some instances, more than 5% of these comonomers may be used. The term "water soluble", as used herein in describing the water soluble polymers and copolymers means total miscibility of the polymer or copolymer with water.

In practicing the process of this invention, the polymerization may be carried out at any temperature above the freezing point of the reaction solution to below the boiling point of such solution at the pressure used, which may be above or below atmospheric pressure. It is preferred, however, to conduct the polymerization reaction at atmospheric pressure and at a temperature of from about 70°C to about 100°C for reasons of convenience.

The polymerization reaction is conducted until all of the monomer has been added and complete polymerization has taken place as indicted by the solids content of the solution.

The amount of monomer present in the solution may vary from about 10% by weight to about 90% by weight based on the total weight of the reaction solution. If less than 10% of monomer is present, then the reaction will take place at a slow rate which is inconvenient. Amounts of monomer in excess of about 90% are not desired because the resultant solution may be too viscous so as to render it impractical to handle.

The polymerization process is practiced by dissolving the metal salt and amine, if present, in water and adding the catalyst initiator and reducing agent dropwise and the monomer slowly to the reaction vessel containing the metal salt and amine. Because the polymerization reaction is often exothermic in nature, by adding the monomer slowly and the catalyst initiator and reducing agent dropwise, an overly vigorous exotherm is avoided. The reaction is considered substantially complete when all of the monomer has been added and the exothermic nature of the reaction has ceased.

0014083

Although a chain transfer agent is not needed in practising the process of this invention, such chain transfer agent may be used in conjunction with the process of this invention to further lower the molecular weight of a polymer prepared by the process of the present invention.

Occasionally, the polymerization process will produce an insufficient initial exotherm so that the polymerization reaction will be slow. If this happens, then an external heat is supplied to provide the initial exotherm necessary for the proper rate of reaction. The initial exotherm for an otherwise slow reaction may be supplied by externally heating the reaction vessel, or by chemically providing the initial exotherm.

Preferred products of the process of the invention are homopolymers of acrylic and methacrylic acid and acrylamide.

Polymer prepared by the process of this invention, such as polyacrylic acid, may be used as a scale inhibitor.

After the water soluble polymer has been prepared, if it is an acid polymer, it may, if desired, be neutralized with an inorganic or organic base. Among the bases which may be used are sodium hydroxide, potassium hydroxide, ammonium hydroxide, triethanolamine, dimethylamino ethanol, ethanolamine, benzyltrimethylammonium hydroxide, and the like. The base used should be selected so that the resultant salt is water soluble, i.e. completely miscible with water.

The manner of neutralizing a polymeric acid is well known in the art and the invention is not to be construed as limited to any particular method of neutralizing a polymeric acid.

Some preferred embodiments of the invention will now be more particularly described in and by the following examples, in which all parts and percentages are by weight unless otherwise specified.

0 0 1 4 0 8 3

- 11 -

Example 1

To a 2 liter round bottom flask equipped with a mechanical stirrer, a condenser arranged to reflux, a thermometer and an inlet for gradual addition of monomer and initiator is added 12.25 grams of cupric sulfate pentahydrate; 25 grams of triethanolamine and 125 grams of water. The reactants are heated to a temperature of 90°C and then 200 grams of aqueous hydrogen peroxide (50% active) and 500 grams of acrylamide dissolved in 333 grams of water are each separately added to the flask at a constant controlled rate over a period of 4 hours while maintaining the reaction temperature between 90 to 100°C. The reaction is complete when the addition of acrylamide and hydrogen peroxide is completed. The reaction vessel is then cooled and the product is removed therefrom.

The solids content is determined by weighing a sample of the resultant polymer solution, baking the sample at 150°C for thirty minutes, weighing the residue after baking and calculating the percent solids. The viscosity is determined using a Brookfield model LVT viscosimeter. Molecular weight is determined by gel permeation chromatography. The degree of monomer conversion is confirmed by gas-liquid chromatography analysis.

The resultant polyacrylamide has a solids content of 52%; a viscosity of 675 cps. (25°C); and an average molecular weight of 2500 to 4000. The degree of monomer conversion is greater than 95%. The amount of hydrogen peroxide remaining in the product (as determined by an iodine/thiosulfate titration) is less than 20% of the amount used.

Example 2

The procedure of Example 1, using the apparatus set forth in Example 1, is repeated except that 2.73 grams of ferrous sulfate heptahydrate is substituted for the cupric sulfate pentrhydrate; 5 grams of dimethylamino ethanol is substituted for the triethanolamine; and 350 grams of water is used. The reaction solution is heated to 70°C. and 16.7 grams of aqueous hydrogen peroxide (30% active) and a monomer mix of 250 grams of acrylic acid and 250 grams of hydroxyethyl methacrylate are added, separately and at a constant rate over a period of 2 hours while maintaining the reaction temperature at 70°C. ± 10°C. The reaction vessel is cooled and the product is removed therefrom.

The resultant water soluble polymer contains 52% solids and has a viscosity of 17,000 cps. (25°C.) and an average molecular weight of 40,000 to 50,000. The degree of monomer conversion is greater than 85%. The residual hydrogen peroxide remaining in the reaction mixture is less than 20% of the amount charged. All determinations are made in the manner set forth in Example 1.

Example 3

The procedure of Example 1, using the apparatus of Example 1, is repeated except that 3.06 grams of cupric sulfate pentahydrate is used; 10 grams of triethanolamine is used; and 360 grams of water is used. The reaction solution is heated to 95°C. and then 500 grams of acrylic monomer and 83.3 grams of aqueous hydrogen peroxide (30% active) are added separately and at a constant rate over a period of 2 hours while maintaining the reaction temperature at 95°C. ± 5°C. The reaction vessel is cooled and the product is removed therefrom.

The resultant polymer contains 55% solids; has a viscosity of 400 cps. (25°C.) and an average molecular weight of 10,000-15,000. The degree of monomer conversion is greater than 95%. The amount of hydrogen

- 13 -

peroxide remaining in the product is less than 10% of the amount charged to the reaction. All determinations are made in the same manner as is set forth in Example 1.

Example 4

The procedure of Example 1, using the apparatus of Example 1, is repeated except that the metal salt used is 9.0 grams of manganese acetate tetrahydrate; 15 grams of dimethylamino ethanol is used and 300 grams of water is used. The reaction solution is heated to a temperature of 85°C. and 500 grams of methacrylic acid and 190 grams of 70% aqueous tertiary butyl hydroperoxide are added separately and at a constant rate over a period of 3 hours while maintaining the reaction temperature at between 85 to 100°C. After the addition is complete, the reaction vessel is cooled and the product is removed.

The product contains 51% solids; has a viscosity of 12,500 cps. (25°C.); and an average molecular weight of 25,000-40,000. The degree of monomer conversion is greater than 85%. The amount of residual peroxide remaining in the product is less than 25% of the amount of peroxide charged.

Example 5

The procedure of Example 1, using the apparatus of Example 1, is repeated except that the metal salt used is 2.06 g of ferrous sulfate heptahydrate and 1000 g of water is used. No tertiary amine is present. The reaction solution is heated to a temperature of 70°C. and a monomer mix consisting of 250 grams of acrylic acid and 250 grams of hydroxyethylmethacrylate and an aqueous solution of 250 grams of 70% aqueous t-butyl hydroperoxide in 250 grams of water are added separately and at a constant rate over a period of two hours while maintaining the reaction temperature at between 70-85°C. After the addition is complete, the reaction vessel is cooled and the product is removed.

0014083

- 14 -

The resultant polymer contains 20% solids; has a viscosity of less than 100 cps. (25°C) and an average molecular weight of 15,000-25,000. The degree of monomer conversion is greater than 75%. The amount of peroxide residue is less than 10% of the amount charged. All determinations are made in the manner set forth in Example 1.

Example 6

The procedure of Example 1, using the apparatus of Example 1, is repeated except that the metal salt used is 0.94 grams of cupric acetate hydrate; 5 grams of tributyl amine; and 350 grams of water are used. The reaction solution is heated to 80°C. and 25 grams of ammonium persulfate dissolved in 100 grams of water and 500 grams of acrylic acid are added separately and at a constant rate over a period of 2.5 hours while maintaining the temperature of the reaction solution at between 80-95°C. After the addition is complete, the reaction vessel is cooled and the product is removed.

The following determinations are made as is set forth in Example 1. The resultant polymer contains 51% solids; has a viscosity of 3,000 cps. (25°C.) and an average molecular weight of 25,000 - 35,000. The degree of monomer conversion is greater than 95%. The peroxide residue remaining in the product is less than 20% of the amount charged.

Example 7

The procedure of Example 1, using the apparatus of Example 1, is repeated except that the metal salt used is 0.23 grams of cobalt (II) chloride hexahydrate and 450 grams of water is used. The system is heated to 85°C. and 41.5 grams of 6% aqueous hydrogen peroxide and 500 grams of acrylic acid are added separately and at a constant rate over a period of 2 hours while maintaining the reaction temperature at 85°C. ± 10°C. After the

- 15 -

addition is complete, the reaction vessel is cooled and the product is removed.

The following determinations are made as is set forth in Example 1. The resultant polymer contains 50% solids; has a viscosity of 3,000 cps. (25°C.) and an average molecular weight of 35,000-50,000. The degree of monomer conversion is greater than 95%. The peroxide residue remaining in the product is less than 5% of the amount charged.

Example 8

The procedure of Example 1, using the apparatus of Example 1, is repeated except that no tertiary amine is present. The reaction vessel is cooled and the product is removed therefrom.

The following determinations are made in the manner of Example 1. The resultant polymer contains 51% solids; has a viscosity of 825 cps. (25°C.) and an average molecular weight of 3,000-5,000. The degree of monomer conversion is greater than 95%. The amount of residual peroxide is less than 35% of the amount charged.

Example 9

The procedure of Example 3, using the apparatus of Example 3 is repeated except that the triethanolamine is omitted.

The following determinations are made in the manner of Example 1. The resultant polymer contains 55% solids; has a viscosity of 500-1,000 cps. (25°C.) and an average molecular weight of 12,000-25,000. The degree of monomer conversion is greater than 95%. The amount of residual peroxide is less than 30% of the amount charged.

Example 10

The procedure of Example 3 is repeated except that 50 grams of triethanolamine is used in place of the 10 grams used in Example 3.

The following determinations are made in the manner of Example 1. The resultant polymer contains 55% solids; has a viscosity of 400 cps. (25°C.) and an average molecular weight of 8,000-15,000. The degree of monomer conversion is greater than 95%. The amount of hydrogen peroxide remaining in the product is less than 5% of the amount charged.

Example 11

To a 2 liter round bottom flask equipped with a mechanical stirrer, a condenser arranged to reflux, a thermometer and an inlet for gradual addition of monomer, reducing agent and initiator is added 0.20 gram of cupric sulfate pentahydrate; 10 grams of dimethylamino ethanol and 350 grams of water. The reactants are heated to a temperature of 90°C and then 50 grams of aqueous hydrogen peroxide (50% active), 97 grams of hypophosphorous acid and 500 grams of acrylic acid are each separately added to the flask at a constant controlled rate over a period of 2 hours while maintaining the reaction temperature between 90 to 100°C. The reaction is complete when the additions are completed. The reaction vessel is then cooled and the product is removed therefrom.

The solids content is determined by weighing a sample of the resultant polymer solution, baking the sample at 150°C for thirty minutes, weighing the residue after baking and calculating the percent solids. The viscosity is determined using a Brookfield model LVT viscosimeter. Molecular weight is determined by gel permeation chromatography. The degree of monomer conversion is confirmed by gas-liquid chromatography analysis.

The resultant polyacrylic acid has a solids content of 53%; a viscosity of 220 cps. (25°C); and an average molecular weight of 3000 to 5000. The degree of monomer conversion is greater than 98%. The amount of hydrogen peroxide remaining in the product (as determined by an iodine/thiosulfate titration) is less than 2% of the amount used.

Example 12

The procedure of Example 11, using the apparatus set forth in Example 11, is repeated except that 0.21 gram of cobalt acetate tetrahydrate is substituted for the cupric sulfate pentahydrate; 10 grams of triethanolamine is substituted for the dimethylamino ethanol; and 300 grams of water is used. The reaction solution is heated

- 18 -

to 90°C. and 83 grams of aqueous hydrogen peroxide (30% active), 16 grams of sodium hypophosphite monohydrate dissolved in 100 grams of water and 500 grams of acrylic acid are added, separately and at a constant rate over a period of 3 hours while maintaining the reaction temperature at 85°C. to 95°C. The reaction vessel is cooled and the product is removed therefrom.

The resultant water soluble polyacrylic acid contains 54% solids and has a viscosity of 2300 cps. (25°C.) and an average molecular weight of 20,000 to 25,000. The degree of monomer conversion is 98%. The residual hydrogen peroxide remaining in the reaction mixture is less than 35% of the amount charged. All determinations are made in the manner set forth in Example 11.

Example 13

The procedure of Example 11, using the apparatus of Example 11, is repeated except that 4 grams of cupric sulfate pentahydrate is used; 5 grams of triethanolamine is used; and 125 grams of water is used. The reactants are heated to 90°C. and 32 grams of sodium hypophosphite monohydrate dissolved in 50 grams of water, 100 grams of aqueous hydrogen peroxide (50% active) and 500 grams of acrylamide dissolved in 335 grams of water are added separately and at a constant rate over a period of 3 hours while maintaining the reaction temperature at 85°C to 100°C. The reaction vessel is cooled and the product is removed therefrom.

The resultant polymer contains 48% solids; has a viscosity of 425 cps. (25°C.) and an average molecular weight of 1800-3000. The degree of monomer conversion is greater than 95%. The amount of hydrogen peroxide remaining in the product is less than 15% of the amount charged to the reaction. All determinations are made in the same manner as is set forth in Example 11.

Example 14

The procedure of Example 11, using the apparatus of Example 11, is repeated except that the metal salt used is 0.11 gram of manganese acetate tetrahydrate and 450 grams of water is used. No tertiary amine is present. The reaction solution is heated to a temperature of 90°C. and a monomer mix of 250 grams of hydroxyethyl acrylate and 250 grams of acrylic acid, and 33 grams of aqueous hydrogen peroxide (30% active) and 15 grams of hypophosphorous acid are added separately and at a constant rate over a period of 4 hours while maintaining the reaction temperature at between 90 to 100°C. After the addition is complete, the reaction vessel is cooled and the product is removed.

The product contains 47% solids; has a viscosity of 14,500 cps. (25°C.); and an average molecular weight of 30,000-40,000. The degree of monomer conversion is greater than 90%. The amount of residual peroxide remaining in the product is less than 30% of the amount of peroxide charged. All determinations are made in the same manner as is set forth in Example 11.

Example 15

The procedure of Example 12, using the apparatus of Example 12, is repeated except that the metal salt used is 0.10 gram of cupric sulfate pentahydrate. The reaction vessel is cooled and the product is removed.

The resultant polymer contains 54% solids; has a viscosity of 900 cps. (25°C) and an average molecular weight of 12,000-18,000. The degree of monomer conversion is greater than 98%. The amount of peroxide residue is less than 15% of the amount charged. All determinations are made in the manner set forth in Example 11.

Example 16

The procedure of Example 15, using the apparatus of

- 20 -

Example 15, is repeated except that the metal salt used is 0.40 gram of cupric sulfate pentahydrate. The reaction vessel is cooled and the product is removed.

The following determinations are made as is set forth in Example 11. The resultant polymer contains 55% solids; has a viscosity of 500 cps. (25°C.) and an average molecular weight of 8000 - 12,000. The degree of monomer conversion is greater than 99%. The peroxide residue remaining in the product is less than 5% of the amount charged.

Example 17

The procedure of Example 11, using the apparatus of Example 11, is repeated except that the metal salt used is 0.20 gram of ferrous sulfate heptahydrate, 350 grams of water is used, and 10 grams of dimethylamino ethanol is used. The system is heated to 90°C. and 50 grams of tertiarybutyl hydroperoxide (70% active), 500 grams of methacrylic acid and 20 grams of sodium hypophosphite monohydrate dissolved in 100 grams of water are added separately and at a constant rate over a period of 2 hours while maintaining the reaction temperature at 90°C-100°C. After the addition is complete, the reaction vessel is cooled and the product is removed.

The following determinations are made as is set forth in Example 1. The resultant polymer contains 51% solids; has a viscosity of 12,000 cps. (25°C.) and an average molecular weight of 22,000-35,000. The degree of monomer conversion is greater than 93%. The peroxide residue remaining in the product is less than 25% of the amount charged.

Example 18

The procedure of Example 16, using the apparatus of Example 16, is repeated except that no tertiary amine is present. The reaction vessel is cooled and the product is removed therefrom.

The following determinations are made in the manner of Example 11. The resultant polymer contains 54% solids; has a viscosity of 750 cps. (25°C.) and an average molecular weight of 11,000-15,000. The degree of monomer conversion is greater than 98%. The amount of residual peroxide is less than 10% of the amount charged.

Example 19

The procedure of Example 16, using the apparatus of Example 16 is repeated except that 20 grams of triethanolamine is used.

The following determinations are made in the manner of Example 11. The resultant polymer contains 55% solids; has a viscosity of 500 cps. (25°C.) and an average molecular weight of 8,000-12,000. The degree of monomer conversion is greater than 99%. The amount of residual peroxide is less than 5% of the amount charged.

Example 20

The procedure of Example 16 is repeated except that 50 grams of ammonium persulfate dissolved in 100 grams of water is used in place of the hydrogen peroxide used.

The following determinations are made in the manner of Example 11. The resultant polymer contains 50% solids; has a viscosity of 500 cps. (25°C.) and an average molecular weight of 12,000-16,000. The degree of monomer conversion is greater than 98%. The amount of hydrogen peroxide remaining in the product is less than 5% of the amount charged.

Example 21

The procedure of Example 11, using the apparatus of Example 11, is repeated except that 0.31 gram of cupric acetate monohydrate is used; 10 grams of triethanolamine is used and 125 grams of water is used. The reaction solution is heated to 90°C. and 215 grams of sodium hypochlorite solution (5.3% active), 160 grams of invert sugar solution which is an equal mixture of D-fructose and D-glucose (5% active) and 500 grams of methacrylic acid are added over a period of two hours while maintaining the reaction temperature at 85°C. to 95°C. The reaction vessel is cooled and the product is removed therefrom.

The resultant polymer has a solids content of 51%; a viscosity of 11,500 cps. (25°C.); and an average molecular weight of 20,000 to 35,000. The degree of monomer conversion is 98%. The amount of residual sodium hypochlorite remaining in the product is less than 5% of the amount used. All determinations are made in the manner of Example 11.

Example 22

The procedure of Example 11, using the apparatus of Example 11, is repeated except that 76.5 grams of sodium bisulfite dissolved in 145 grams of water is substituted for the hypophosphorous acid.

The resultant polymer has a solids content of 52%; a viscosity of 4500 cps. (25°C.); and an average molecular weight of 35,000 to 45,000. The degree of monomer conversion is greater than 93%. The amount of hydrogen peroxide remaining in the product is less than 1% of the amount used. All determinations are made in the manner set forth in Example 11.

Example 23

The procedure of Example 11, using the apparatus of Example 11, is repeated except that 57 grams of sodium formaldehyde sulfoxylate dissolved in 100 grams of water is substituted for the hypophosphorous acid.

The resultant polyacrylic acid has a solids content of 54%; a viscosity of 1250 cps. (25°C.); and an average molecular weight of 15,000 to 25,000. The degree of monomer conversion is 98%. The amount of hydrogen peroxide remaining in the product is less than 1% of the amount used.    All determinations are made in the manner set forth in Example 11.

Example 24

The procedure of Example 11, using the apparatus of Example 11, is repeated except that no amine is present and 650 grams of water is used.    The reaction solution is heated to 85°C. and 28 grams of tertiary butyl hydroperoxide (70% active), 36 grams of hydrazine solution (10% active) and a monomer mix of 250 grams of hydroxyethylmethacrylate and 250 grams of acrylic acid are added, separately and at a constant rate, over a period of three hours while maintaining the reaction temperature between 80°C. to 90°C.    The reaction vessel is cooled and the product is removed therefrom.

The resultant polymer has a solids content of 42%; a viscosity of 7500 cps. (25°C.); and an average molecular weight of 25,000 to 35,000.    The degree of monomer conversion is 98%.    The amount of peroxide remaining in the product is less than 10% of the amount used. All determinations are made in the manner set forth in Example 11.

# 0014083

- 1 -

<u>CLAIMS</u>:

1. A process for preparing a water soluble polymer having a molecular weight of up to about 50,000 which comprises reacting, in an aqueous solution system at a temperature up to the boiling point of the system, monomer comprising (a) at least one of acrylic acid, methacrylic acid, acrylamide, methacrylamide, alkylpolyalkoxyacrylate, alkylpolyalkoxymethacrylate, N-vinyl pyrollidone, acryloxypropionic acid, methacrolein and acrolein, optionally with from about 5 to 50% by weight of the total monomer present of (b) at least one of itaconic acid, maleic acid, fumaric acid, hydroxyethylmethacrylate, hydroxypropylmethacrylate, hydroxyethylacrylate, hydroxypropylacrylate, acrylonitrile, methacrylonitrile, dimethylaminoethyl acrylate, dimethylaminoethyl methacrylate, t-butylaminoethyl acrylate, 4-vinyl pyridine, beta-hydroxyethyldimethylaminoethyl methacrylate salt and t-butylaminoethyl methacrylate, in the presence of a catalyst system comprising initiator, metal salt wherein the molar ratio of initiator to metal ion is from about 10:1 to about 5000:1 and the initiator is present in an amount of from about 0.5 weight percent to about 35 weight percent based on the weight of monomer present.

2. A process as claimed in claim 1 wherein the molar ratio of initiator to metal ion is from about 150:1 to about 5000:1.

3. A process as claimed in claim 2 wherein the molar ratio of initiator to metal ion is from about 400:1 to about 2000:1.

4. A process as claimed in claim 1 wherein the molar ratio of initiator to metal ion is from about 10:1 to about 150:1.

5.   A process as claimed in any of claims 1 to 4 wherein the catalyst system also contains reducing agent and the molar ratio of initiator to reducing agent is from about 0.5:1 to about 20:1.

6.   A process as claimed in claim 5 wherein the molar ratio of initiator to reducing agent is from about 1:1 to about 20:1.

7.   A process as claimed in any of claims 1 to 6 wherein component (a) consists of at least one of acrylic acid, methacrylic acid, acrylamide, methacrylamide, N-vinyl pyrollidone, acryloxypropionic acid, acrolein and methacrolein.

8.   A process as claimed in claim 7 wherein the said monomer is acrylic acid.

9.   A process as claimed in any of claims 1 to 8 wherein the catalyst system includes a tertiary amine in a molar ratio of amine to initiator up to about 1:10.

10.   A process as claimed in claim 8 wherein the tertiary amine is at least one aromatic amine, aliphatic amine, cycloaliphatic amine, heterocyclic amine, alkanol amine and tertiary amino acid.

11.   A process as claimed in claim 10 wherein the amine is triethanolamine or dimethylamino ethanol.

12.   A process as claimed in any preceding claim wherein the initiator is present in an amount of from about 1% to about 20% based on the weight of monomer present.

13.   A process as claimed in any preceding claim wherein the initiator is hydrogen peroxide, tertiary butyl hydroperoxide, or sodium hypochlorite.

14. A process as claimed in any preceding claim wherein the metal salt is cupric sulfate, ferrous sulfate or manganese acetate.

15. A process as claimed in any of claims 5 to 14 wherein the reducing agent is hypophosphorous acid, sodium hypophosphite or a water soluble salt of hypophosphorous acid.

16. A process as claimed in any preceding claim wherein the monomer includes up to about 5% by weight of the total monomer present of one or more of vinyl acetate, styrene, vinyl toluene, alpha methyl styrene, a N,N-dialkylacrylamide, a N-alkylacrylamide and an acrylate ester and/or methacrylate ester other than those of component (b).

17. A process as claimed in any preceding claim wherein the monomer is present in an amount of from about 10% to about 90% of the total weight of the reaction solution.

18. A process as claimed in any preceding claim wherein the reaction is conducted at a temperature of from about 70°C to about 100°C.

19. A process as claimed in any preceding claim wherein the water soluble polymer is an acid polymer and is neutralized with a base.

20. Polymer produced by a process as claimed in any preceding claim.

21. Use of polymer as claimed in claim 20 as or in a scale inhibitor.

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 405 106 (C.S. SCANLEY)<br>* Claim 1; column 2, lines 33-41; column 4, lines 1-4 *<br>--<br>GB - A - 1 206 711 (DOW)<br>* Claims 1,2,5 *<br>--<br>US - A - 2 789 099 (H.M. RIFE)<br>* Claim 1 *<br>---- | 1-21<br><br><br>1-21<br><br><br>1-8,14 15,20 | C 08 F 20/04<br>2/10 |

**TECHNICAL FIELDS SEARCHED (Int.Cl. 3)**

C 08 F 20/04
20/06
120/04
120/06
220/04
220/06
C 08 F 2/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | Date of completion of the search | Examiner |
|---|---|---|---|
| The present search report has been drawn up for all claims | | | |
| Place of search<br>The Hague | | 16-04-1980 | CAUWENBERG |

EPO Form 1503.1 06.78